Europäisches Patentamt

European Patent Office

Office européen des brevets

(19)

(11) Veröffentlichungsnummer: **0 145 995**
**B1**

(12) **EUROPÄISCHE PATENTSCHRIFT**

(45) Veröffentlichungstag der Patentschrift:
**12.07.89**

(21) Anmeldenummer: **84114078.3**

(22) Anmeldetag: **22.11.84**

(51) Int. Cl.⁴: **C 08 G 18/70,** C 08 G 18/80,
C 08 G 18/08, C 08 K 7/02

(54) Verstärkte, kompakte oder zellige Polyurethan-Formteile, Verfahren zu deren Herstellung aus hitzehärtbaren Einkomponenten-Polyurethan-Formulierungen und deren Verwendung.

(30) Priorität: **29.11.83 DE 3343125**

(43) Veröffentlichungstag der Anmeldung:
**26.06.85 Patentblatt 85/26**

(45) Bekanntmachung des Hinweises auf die Patenterteilung:
**12.07.89 Patentblatt 89/28**

(84) Benannte Vertragsstaaten:
**AT BE CH DE FR GB IT LI NL SE**

(56) Entgegenhaltungen:
**EP-A-0 062 780**
**EP-A-0 071 898**
**EP-A-0 100 507**
**DE-A-1 570 548**
**DE-A-2 941 051**
**US-A-2 858 298**

(73) Patentinhaber: **BASF Aktiengesellschaft, Carl-Bosch- Strasse 38, D-6700 Ludwigshafen (DE)**

(72) Erfinder: **Werner, Frank, Dr., Erschigweg 9, D-6730 Neustadt (DE)**
Erfinder: **Blum, Rainer, Bannwasserstrasse 58, D-6700 Ludwigshafen (DE)**
Erfinder: **Horn, Peter, Dr., Neue Stuecker 15, D-6900 Heidelberg (DE)**
Erfinder: **Welz, Martin, Kaiserslauterer Strasse 231, D-6702 Bad Duerkheim (DE)**
Erfinder: **Osterloh, Rolf, DR., Am Wehrhaus 16a, D-6718 Gruenstadt (DE)**

EP 0 145 995 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Herstellung von faserverstärkten, zelligen Polyurethan-Formteilen oder von Halbzeug aus faserverstärkten, thermoplastischen Polyurethanen wird in zahlreichen Patenten und Patentanmeldungen beschrieben.

Nach Angaben der DE-A-1 694 138 (GB-1 209 243) werden Polyurethan-Schaumstoff-Formteile hergestellt, indem man ein schäumfähiges Gemisch aus organischen Polyisocyanaten, Verbindungen mit reaktiven Wasserstoffatomen, Treibmitteln und Katalysatoren in ein temperiertes, verschließbares Formwerkzeug in einer größeren Menge einbringt, als zu dessen vollständiger Ausschäumung notwendig ist, und darin unter Verdichtung aufschäumen und aushärten läßt.

Zur Verbesserung der Festigkeitseigenschaften derartiger Schaumstoff-Formteile werden Fasern oder Fasermatten sowie räumlich gut durchschäumbare Armierungen, z. B. aus Metall, Kunststoff oder Sperrholz, in das Formwerkzeug eingelegt, die bei der nachfolgenden Polyadditionsreaktion und Verschäumung in das sich bildende Polyurethan-Formteil eingebettet werden. Diese Methode konnte sich in der Praxis zur Herstellung von größeren Formteilen nicht durchsetzen, da eine ausreichende Durchdringung und Benetzung der Einlagen mit der relativ hochviskosen schäumfähigen Polyurethanmischung, insbesondere bei Systemen mit relativ kurzen Startzeiten, nur auf sehr kurzen Strecken möglich ist. Die schäumfähige Polyurethanmischung über mehrere Öffnungen gleichzeitig in das Formwerkzeug unter Druck einzubringen, ist jedoch apparativ aufwendig und kostspielig.

Zur Beseitigung dieses Nachteils wird gemäß DE-A-2 854 544 (US-4 298 556) dem schaumfähigen Polyurethangemisch zur Verbesserung des Fließverhaltens ein neutraler Ester mit einem Siedepunkt oberhalb der Reaktionstemperatur des Reaktionsschaumes in einer Menge von 5 bis 30 Gew.-% einverleibt. Durch diesen Esterzusatz können die mechanischen Eigenschaften der erhaltenen Formteile nachteilig verändert werden. Außerdem gelingt es auch nach dieser Methode nur maximal 40 Gew.-% sehr feiner Fasern in den Schaumstoff einzubetten.

In der DE-A-1 454 988 (GB-1 146 036) wird ein Verfahren zur Herstellung von Formteilen beschrieben, bei dem Halbzeug aus faserverstärkten Thermoplasten bis zum plastischen Fließen erhitzt und anschließend verformt wird. Dadurch lassen sich auf einfache Weise stabile und stark beanspruchbare Formteile herstellen, die z. B. im Automobilbau oder Möbelbau Anwendung finden können. Das Halbzeug, das nach diesem Verfahren verarbeitet wird, besteht aus ebenen Bahnen, Tafeln oder Platten, die durch Beschichten von textilen Flächengebilden, z. B. Glasfasermatten, mit einer Kunststoffschmelze mittels eines Extruders hergestellt werden können. Bei diesem einfachen Verfahren ist jedoch eine einwandfreie Tränkung der Fasermatte mit Thermoplastschmelze auch dann nicht möglich, wenn die Fasermatte beidseitig beschichtet wird. Im fertigen Halbzeug bilden sich Hohlräume oder Lunker, wodurch die Festigkeit der Endprodukte stark herabgesetzt wird.

Diese Erscheinungen werden auch nicht vollständig vermieden, wenn man nach der DD-A-20 549 oder nach der DE-A-2 007 370 (GB-1 306 145) lockere Glasfasermatten mit einem thermoplastischen Kunststoff laminiert oder imprägniert und anschließend heiß verpreßt. Außerdem ergibt sich bei einer kontinuierlichen Ausführungsform dieses Verfahrens der Nachteil, daß das heiße Halbzeug auschließend an das Verpressen in einem besonderen Arbeitsgang abgekühlt werden muß. Das dauert verhältnismäßig lange, so daß die Zykluszeiten stark verlängert werden.

Nach Angaben der DE-A-2 312 816 (GB-1 451 824) werden zur kontinuierlichen Herstellung von Halbzeug aus faserverstärkten thermoplastischen Kunststoffen ein oder mehrere, auf 150 bis 300°C erwärmte, textile Flächengebilde und eine Schmelze eines thermoplastischen Kunststoffes zusammengeführt und dann in einer Druckzone miteinander verpreßt und abgekühlt. Nachteilig beim Einarbeiten von thermoplastischen Kunststoffen über die Schmelze in textile Flächengebilde, beispielsweise Glasfasermatten, ist die durch deren hohe Viskosität bedingte unzureichende Benetzung der textilen Flächengebilde, die zu Fehlstellen in Form von Lufteinschlüssen führen können.

Ein anderes Prinzip zur Herstellung von Halbzeug aus faserverstärkten Thermoplasten ist in der DE-A-2 054 471 beschrieben. Danach werden die Fasermatten mit Thermoplastdispersionen beschichtet. Anschließend wird das Wasser verdampft und das Halbzeug bis zum Erweichen des Kunststoffes erwärmt. Damit läßt sich zwar lunkerfreies Halbzeug herstellen, das Verfahren ist jedoch sehr aufwendig, da zur vollständigen Entfernung des Wassers komplizierte Trocknungseinrichtungen angewandt werden müssen.

Reversibel warmverformbare faserverstärkte harte Polyurethankunststoffe werden gemäß DE-AS-2 164 381 (GB-1 411 958) erhalten, wenn man anorganische und/oder organische Fasern in ein bei Temperaturen bis 50°C flüssiges Polyurethan-Reaktionsgemisch einarbeitet, das durch Umsetzung von Hydroxylgruppen aufweisenden Polyestern und/oder Polyethern mit Hydroxylzahlen von 100 bis 600 mit Urethan-, Biuret-, Harnstoff-, Allophanat-, Carbodiimid-, Uretonimin- und/oder Isocyanuratgruppen aufweisenden Polyisocyanaten oder Polyphenyl-polymethylen-polyisocyanaten hergestellt wird. Nachteilig hierbei ist, daß nur modifizierte Polyisocyanate verwendbar sind, die nicht nur die mechanischen Eigenschaften beeinflussen, sondern auch das Verfahren verteuern.

Ein Verfahren zur kontinuierlichen Herstellung von Halbzeug aus faserverstärkten, thermoplastischen Polyurethanen, bei dem eine leichte und vollständige Benetzung der faserhaltigen Flächengebilde mit der reaktionsfähigen Polyurethanmischung erzielt wird, ist Gegenstand der nachveröffentlichten DE-A-3 242 089 (EP-A-111 122). Nach diesem Verfahren werden die Polyisocyanate, Polyhydroxylverbindungen, Kettenverlängerungsmittel, Katalysatoren sowie gegebenenfalls Hilfsmittel und/oder Zusatzstoffe kontinuierlich gemischt, die fließfähige Reaktionsmischung auf das faserhaltige Flächengebilde aufgebracht und nach dem Bandverfahren in einer temperierten Zone bei Temperaturen von 60 bis 220°C bis zur Erstarrung reagieren gelassen.

Bekannt ist außerdem die Herstellung von Polyurethan-Flächengebilden, -Überzügen oder -Beschichtungen aus lagerbeständigen, in der Wärme zu Polyurethanen aushärtbaren Massen, die z. B. gemäß DE-A-1 570 548 bestehen aus einer Polyhydroxylverbindung, einem über 100°C schmelzenden Uretdiondiisocyanat und einem über 80°C schmelzenden Kettenverlängerungsmittel, wobei die Korngröße des Uretdiondiisocyanats und Kettenverlängerungsmittels zu mindestens 80 % der Gesamtmenge unter 30 µm liegt.

Als Beschichtungs- und Verklebungsmittel sowie als Dichtungsmassen geeignete lagerstabile hitzehärtbare Stoffmischungen, bei denen das Polyisocyanat in Form von diskreten Teilchen im Polyol vorliegt und an seiner Oberfläche desaktiviert ist, werden ferner in der EP-A-62 780 beschrieben. Entsprechend dem Verwendungsbereich werden nach diesem Verfahren nur weiche, klebrige Produkte erhalten.

Die Aufgabe der vorliegenden Erfindung bestand darin, verstärkte, kompakte oder zellige Polyurethan-Formteile nach einer technisch praktikablen Methode kostengünstig herzustellen, das die obengenannten Nachteile weitgehend beseitigt. Die Polyurethan-Formteile sollten einen hohen Gehalt an Verstärkungsmittel enthalten können. Hierbei mußte jedoch sichergestellt sein, daß das Verstärkungsmittel vor Beginn der Polyurethanbildung vollständig mit der reaktionsfähigen, gegebenenfalls schaumfähigen Polyurethanmischung benetzt ist.

Diese Aufgabe konnte gelöst werden durch die Verwendung einer bei Raumtemperatur lagerstabilen, hitzhärtbaren Einkomponenten-Polyurethan-Formulierung zur Herstellung der Polyurethan-Formkörper.

Gegenstand der Erfindung ist somit ein Verfahren zur Herstellung von verstärkten, kompakten oder zelligen Polyurethan-Formteilen, das dadurch gekennzeichnet ist, daß man

ein bei Raumtemperatur festes organisches Polyisocyanat in Form von diskreten Teilchen mit Teilchendurchmessern von 0,1 bis 150 µm an der Teilchenoberfläche durch chemische Reaktion mit einem Desaktivierungsmittel, ausgewählt aus der Gruppe der primären und sekundären aliphatischen Amine, Wasser oder Verbindungen, die Carboxyl-, phenolische Hydroxyl-, Hydrazid-, Amid- oder alkoholische Hydroxylgruppen enthalten, wobei die Verbindungen mit alkoholischen Hydroxylgruppen eine Löslichkeit in Wasser von kleiner als 1 Gew.-% besitzen, desaktiviert, indem man 0,1 bis 20 Äquivalentprozent der insgesamt vorhandenen Isocyanatgruppen des festen organischen Polyisocyanats in Gegenwart eines Verdünnungsmittels mit dem Desaktivierungsmittel umsetzt und das erhaltene, oberflächenmodifizierte Polyisocyanat (a) in einem Polyol (b) dispergiert oder

daß man das bei Raumtemperatur feste organische Polyisocyanat in Form von diskreten Teilchen mit Teilchendurchmessern von 0,1 bis 150 µm in einem Polyol (b) dispergiert und in situ an der Teilchenoberfläche durch chemische Reaktion desaktiviert, indem man 0,1 bis 20 Äquivalentprozent der insgesamt vorhandenen Isocyanatgruppen des festen organischen Polyisocyanats mit einem solchen der vorgenannten Desaktivierungsmittel umsetzt, welches gegenüber Isocyanatgruppen reaktiver ist als die funktionellen Gruppen von (b),

mit der Maßgabe, daß die Stoffmischung aus (a) und (b) eine Viskosität bei 25°C von 100 bis 10 000 m.Pa.s besitzt, und diese Stoffmischung mit verstärkend wirkenden Materialien (c) aus der Gruppe der anorganischen Fasern, organischen Fasern und/oder faserhaltigen Flächengebilde und gegebenenfalls (d) Hilfsmitteln und/oder Zusatzstoffen in Kontakt bringt und unter Erwärmung in offenen oder geschlossenen Formwerkzeugen umsetzt.

Gegenstände der Erfindung sind ferner die nach diesen Verfahren erhältlichen verstärkten, kompakten oder zelligen Polyurethan-Formteile und die Verwendung dieser Formteile als selbsttragende Verkleidungsteile, Versteifungsteile oder Formkörper im Kraftfahrzeug-, Schienenfahrzeug- oder Flugzeugbau, in der Möbel- oder Bauindustrie.

Durch die niedrige Viskosität der bei Raumtemperatur lagerstabilen Stoffmischung aus Polyisocyanaten und Polyolen, die je nach Art und Mengen der Aufbaukomponenten bei 25°C 100 bis 10 000 m.Pa.s, vorzugsweise 500 bis 5000 m.Pa.s beträgt, wird eine leichte und vollständige genetzung der Verstärkungsmittel gewährleistet. Der apparative Aufwand für die Durchführung des Verfahrens ist gering, da keine komplizierte Gießmaschine mit Dosieraggregaten für die verschiedenen Aufbaukomponenten und einer Mischvorrichtung benötigt wird. Die stabilen Stoffmischungen können diskontinuierlich aus einem Gefäß von Hand in das Formwerkzeug gegossen oder kontinuierlich über eine Dosierpumpe in die Formen eingebracht werden. Die Polyurethan-Formteile können somit kostengünstig hergestellt werden.

Zu den Aufbaukomponenten für die Stoffmischung sowie deren Herstellung, den verstärkend wirkenden Materialien und gegebenenfalls Hilfsmitteln und/oder Zusatzstoffen ist folgendes auszuführen:

Als organische Polyisocyanate kommen aliphatische, cycloaliphatische, araliphatische und vorzugsweise aromatische, bei Raumtemperatur feste mehrwertige Isocyanate in Frage. Sofern die mehrwertigen Isocyanate bei Raumtemperatur flüssig sind, werden sie durch eine chemische Umsetzung in sogenannte modifizierte, mehrwertige, bei Raumtemperatur feste Polyisocyanate übergeführt. Beispielhaft genannt seien unmodifizierte und Ester-, Harnstoff-, Biuret-, Allophanat-, Carbodiimid- und vorzugsweise Urethan-, Uretdion-und/oder Isocyanuratgruppen enthaltende Di- und/oder Polyisocyanate auf der Grundlage von Alkylendiisocyanaten mit 2 bis 12, vorzugsweise 4 bis 6 Kohlenstoffatomen im Alkylenrest, wie 1,2-Ethan-, 1,4-Butan-, 2-Ethyl-1,4-butan, 2-Methyl-1,5-pentan-, 1,6-Hexan-, 2-Ethyl-1,6-hexan-, 1,8-Octan-, 1,10-Decan- und 1,12-Dodecan-diisocyanat, cycloaliphatischen Diisocyanaten, wie Cyclohexan-1,3- und -1,4-diisocyanat sowie beliebigen Gemischen dieser Isomeren, 1-Isocyanato-3,3,5-trimethyl-5-isocyanatomethyl-cyclohexan, 2,4- und 2,6-Hexahydrotoluylendiisocyanat sowie beliebigen Gemischen dieser Isomeren 4,4'- 2,2'- und 2,4'-Dicyclohexylmethan-diisocyanat sowie beliebigen Gemischen aus mindestens zwei dieser Isomeren; araliphatischen Diisocyanaten, wie 1,2-, 1,3- und 1,4-Xylylen-diisocyanat und aromatischen Polyisocyanaten, wie 4,4'-, 2,4'- und 2,2'-Diisocyanato-diphenylmethan und den entsprechenden Gemischen aus mindestens zwei dieser Isomeren, 2,4- und 2,6-Diisocyanato-toluol und den entsprechenden Isomerengemischen, 1,5-Diisocyanato-naphthalin, Polyphenyl-polymethylen-polyisocyanate und Gemischen aus den isomeren Diisocyanato-diphenylmethanen und Polyphenyl-polymethylen-polyisocyanaten. Die genannten Di- und Polyisocyanate können einzeln oder in Form von Mischungen eingesetzt werden.

Besonders bewährt haben sich und daher vorzugsweise verwendet werden 4,4'-Diisocyanato-diphenylmethan und 1,5-Naphthalin-diisocyanat und die mit Urethan-, Uretdion- und/oder Isocyanuratgruppen modifizierten Di- und/oder Polyisocyanate auf Basis von 1,6-Hexan-diisocyanat, 1-Isocyanato-3,3,5-trimethyl-5-isocyanatomethyl-cyclohexan, 2,4'-, 4,4'-Diisocyanato-diphenylmethan und insbesondere 2,4- und/oder 2,6-Diisocyanato-toluol.

Modifizierte Polyisocyanate der bevorzugten Art sind insbesondere Additionsprodukte aus Diisocyanato-toluolen und Trimethylolpropan, trimerisierte Isocyanuratgruppen enthaltende Diisocyanato-toluole und Diisocyanato-diphenylmethane und dimerisierte Uretdiongruppen aufweisende Diisocyanato-toluole, 4,4'- und/oder 2,4'-Diisocyanato-diphenylmethane.

Als Polyole zur Herstellung der bei Raumtemperatur lagerstabilen, hitzehärtbaren Stoffmischungen bzw. der daraus hergestellten verstärkten, kompakten oder zelligen Polyurethan-Formteile werden vorzugsweise lineare und/oder verzweigte Polyesterole und/oder Polyetherole mit Molekulargewichten von 136 bis 10.000, vorzugsweise 3.000 bis 8.000 und insbesondere 400 bis 6.000 verwendet. In Betracht kommen jedoch auch andere hydroxylgruppenhaltige Polymere mit den genannten Molekulargewichten, beispielsweise Polyesteramide, Polyacetale, wie Polyoxymethylene und Butandiol-formale, und Polycarbonate, insbesondere aliphatische Polycarbonate, hergestellt aus Diphenylcarbonat und Hexandiol-1,6 durch Umesterung.

Geeignete Polyesterole besitzen eine Funktionalität von 2 bis 3,5, vorzugsweise 2 bis 3, und können beispielsweise hergestellt werden nach bekannten Verfahren aus organischen Dicarbonsäuren, vorzugsweise aliphatischen Dicarbonsäuren mit 2 bis 12, vorzugsweise 4 bis 6 Kohlenstoffatomen im Alkylenrest und mehrwertigen Alkoholen, vorzugsweise Diolen. Als organische Dicarbonsäuren seien beispielhaft genannt: aliphatische Dicarbonsäuren, wie Bernstein-, Glutar-, Pimelin-, Undecandi-, Dodecandisäure und vorzugsweise Adipinsäure und Mischungen aus Bernstein-, Glutar- und Adipinsäure und aromatische Dicarbonsäuren, wie Phthalsäure und Terephthalsäure. Beispiele für zwei- und mehrwertige, insbesondere zweiwertige Alkohole sind: 1,2- bzw. 1,3-Propandiol, 1,4-Butandiol, 1,5-Pentandiol, 1,6-Hexandiol, 1,10-Decandiol, Dipropylenglykol, Glycerin, Trimethylolpropan und vorzugsweise 1,2-Ethan-diol, Diethylenglykol, 1,4-Butandiol, 1,6-Hexandiol und Mischungen aus 1,4-Butandiol, 1,5-Pentandiol und 1,6-Hexandiol. Als mehrwertige Alkohole können ferner Alkanolamine, wie Triethanolamin, Triisopropanolamin, Diethanolamin u.a. verwendet werden. Sofern zur Herstellung der Polyesterole polyfunktionelle, insbesondere trifunktionelle Alkohole mitverwendet werden, muß deren Gehalt so gewählt werden, daß die Funktionalität der erhaltenen Polyesterole maximal 3,5, vorzugsweise 2 bis 3,0 ist.

Vorteilhafte Ergebnisse wurden erzielt mit und daher vorzugsweise verwendet werden solche Polyesterole, die durch Polykondensation eines Dicarbonsäuregemisches, das bezogen auf das Gesamtgewicht der genannten Dicarbonsäuren enthält: 20 bis 35 Gew.-% Bernsteinsäure, 35 bis 50 Gew.-% Glutarsäure und 20 bis 32 Gew.-% Adipinsäure und Alkoholmischungen aus 1,2-Ethandiol/1,4-Butandiol, 1,2-Ethandiol/Diethylenglykol, 1,2-Ethandiol/Trimethylolpropan, Diethylenglykol/Trimethylolpropan, 1,2-Ethandiol/Triisopropanolamin und Diethylenglykol/Triisopropanolamin oder Adipinsäure und einer Mischung aus 1,4-Butandiol, 1,5-Pentandiol und 1,6-Hexandiol erhalten werden.

Die Polyesterole besitzen Molekulargewichte von 1000 bis 3000, vorzugsweise 1200 bis 2500.

Vorzugsweise als Polyole verwendet werden jedoch Polyetherole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und einem Startermolekül, das 2 bis 8, vorzugsweise 2 bis 4 reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-Mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.

Als Startermoleküle kommen ferner im Betracht Alkanolamine, wie Ethanolamin, Diethanolamin, N-Methyl- und N-Ethylethanolamim, N-Methyl- umd N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylol-propan, Pentaerythrit, Sorbit und Saccharose.

Die Polyetherole besitzen Molekulargewichte von 136 bis 10.000, vorzugsweise von 3000 bis 8000 und insbesondere 400 bis 6000. Sie können ebenso wie die Polyesterole einzeln oder in Form von Mischungen verwendet werden. Ferner können sie mit den Polyesterolen sowie den hydroxylgruppenhaltigen Polyesteramiden, Polyacetalen und Polycarbonaten gemischt werden.

Die Stoffmischungen aus Polyisocyanaten und Polyolen enthalten die Polyisocyanate in Form diskreter Teilchen mit Teilchendurchmessern von 0,1 bis 150 µm, insbesondere 1 bis 50 µm, im Polyol dispergiert.

Um zu verhindern, daß bei Raumtemperatur eine Polyadditionsreaktion zwischen den Polyisocyanaten und Polyolen eintritt, werden die dispergierten Polyisocyanatteilchen an ihrer Oberfläche desaktiviert. Das Desaktivierungsmittel wird hierzu so gewählt, daß es an der Oberfläche der Polyisocyanatteilchen durch chemische Umsetzung gebunden ist und auf diese Weise eine Phasentrennung zwischen Polyisocyanatteilchen und Polyolen bewirkt wird.

Für die Desaktivierung werden 0,1 bis 20, vorzugsweise 0,1 bis 10 und insbesondere 0,3 bis 5 Äquivalentprozent der insgesamt vorhandenen Isocyanatgruppen mit dem Desaktivierungsmittel zur Reaktion gebracht.

Als Desaktivierungsmittel kommen in Frage: primäre und sekundäre aliphatische Amine, Wasser oder Verbindungen, die Carboxyl-, phenolische Hydroxyl-, Hydrazid-, Amid- oder alkoholische Hydroxylgruppen enthalten, wobei die Verbindungen mit alkoholischen Hydroxylgruppen eine Löslichkeit in Wasser von kleiner als 1 Gew.-% besitzen müssen. Besonders gut geeignet sind längerkettige Monoamine, z. B. Stearylamin, die zu einer Art aufgepfropfter Emulgatoren abreagieren. Höhermolekulare Polyamine, wie z. B. Polyamidamine, und hydroxylterminierte Polymere, wie z. B. hydroxylterminierte Polybutadienöle, reagieren unter Ausbildung aufgepfropfter Schutzkolloide. Besonders geeignet zur Desaktivierung der Isocyanatgruppen an der Oberfläche der Polyisocyanatteilchen, d.h. zur Stabilisierung der Isocyanat/Polyol-Dispersionen, sind auch Reaktionen, die auf den Isocyanaten zu Harnstoff- bzw. Polyharnstoffstrukturen führen, weil diese in den meisten Polyolen und organischen Lösungsmitteln unlöslich sind. Solche Harnstoffe bzw. Polyharnstoffe bildenden Reagenzien sind Wasser und primäre oder sekundäre Amine, wobei kurzkettige Diamine, wie Ethylendiamin oder Propylendiamin bevorzugt sind. Die aus diesen kurzkettigen Diaminen gebildeten Polyharnstoffe sind organophober als die aus längerkettigen Diaminen gebildeten und wirken deshalb in manchen Fällen besser stabilisierend.

Als Desaktivierungsmittel kommen ferner in Betracht: Verbindungen, die Carboxylgruppen enthalten, wie z. B. Homo- und Copolymerisate der Acrylsäure, Methacrylsäure, Maleinsäure und anderer polymerisierbarer Säuren, saure Polykondensationsprodukte, wie z. B. mit Säureüberschuß hergestellte Polyester, saure Polymere, die durch Alkoholyse der Addukte von Maleinsäureanhydrid an ungesättigten Polymeren, z. B. Leinöl oder Polybutadienöl, erhalten werden;

Verbindungen, die phenolische Hydroxylgruppen enthalten, wie z. B. Phenol, Kresol, Cardanol, p-tert.-Butylphenol, 2,2-Bis[4-hydroxy-phenyl]-propan und die unvernetzten Kondensationsprodukte dieser Phenolkörper mit Aldehyden, z. B. Formaldehyd, die auch als Resole bezeichnet werden.

Amidgruppen enthaltende Verbindungen, wie z. B. lösliche Polyamide und Polymerisate von Acrylamid und Methacrylamid oder Copolymerisate von Acrylamid und/oder Methacrylamid mit Acrylsäure- und/oder Methacrylsäureestern;

Polyhydrazide, die durch Hydrazinolyse von Polyacrylaten erhalten werden und deren Herstellung z. B. von M. Hartmann, R. Dowbenko, U.T. Hockswender in Organic Coatings + Applied Polymer Science 46, 1982, Seite 429 mit 432 beschrieben wird.

Geeignet sind auch Mono- und Polyalkohole, sofern deren Löslichkeit in Wasser unter 1 Gew.-% liegt.

Die genannten Desaktivierungsmittel weisen im allgemeinen Molekulargewichte von 18 bis 1.000.000, vorzugsweise von 18 bis 5000 auf.

Die Herstellung der Stoffmischungen erfolgt zweckmäßigerweise unter Verwendung üblicher Dispergier- und Mischaggregate. Das Polyisocyanat wird hierzu vorteilhafterweise bei Temperaturen unter 40°C, vorzugsweise bei Temperaturen von 0 bis 25°C in den Polyolen dispergiert, wobei entweder das Polyol bereits die gesamte Menge eines oder mehrerer der Desaktivierungsmittel enthält oder mindestens eines der Desaktivierungsmittel kurz nach dem Dispergiervorgang der Stoffmischung einverleibt wird. Selbstverständlich können beide Verfahrensweisen auch miteinander kombiniert werden, wobei das Polyol, beispielsweise, bereits einen Teil des Desaktivierungsmittels enthält, während der andere Teil desselben oder eines anderen Desaktivierungsmittels der Stoffmischung nach der Polyisocyanatdispergierung hinzugefügt wird.

Diese sogenannte in situ Stabilisierung wird vorzugsweise durchgeführt, wenn das Desaktivierungsmittel eine wesentlich größere Reaktivität gegenüber Polyisocyanaten besitzt als das die kohärente Phase bildende Polyol. Da Polyisocyanate mit primären Aminen erheblich rascher reagieren als mit primäre Hydroxylgruppen aufweisenden Polyolen, können durch Einrühren von Polyisocyanaten, vorzugsweise von pulverförmigen Polyisocyanaten, wie 1,5-Naphthalin-diisocyanat, 4,4'-Diisocyanato-diphenylmethan, dimerisierten uretdiongruppenhaltigen Diisocyanato-diphenylmethanen und insbesondere dimerisierten uretdiongruppenhaltigen Diisocyanato-toluolen in aliphatische Polyamine als Desaktivierungsmittel enthaltende Polyole, vorzugsweise Polyetherole, unmittelbar bei Raumtemperatur lagerstabile Stoffmischungen erhalten werden. Ein zusätzlicher Vorteil dieses Verfahrens wird durch die Bildung von Harnstoffverbindungen an der Oberfläche der Polyisocyanatteilchen erzielt, die bei höheren Temperaturen mit weiterem Polyisocyanat zu Biuretgruppen aufweisenden Polyadditionsprodukten weiterreagieren, d.h. das Desaktivierungsmittel wird in das hochmolekulare Polyadditionsprodukt eingebaut und führt zu keinen Inhomogenitätsbereichen im Formteil.

Nach einem anderen Verfahren zur Herstellung der Stoffmischungen wird das Polyisocyanat zunächst in Gegenwart von inerten Verdünnungsmitteln mit dem Desaktivierungsmittel behandelt und danach das behandelte Polyisocyanat im Polyol dispergiert. Die inerten Verdünnungsmittel können nach der Desaktivierung der Polyisocyanate aus der Reaktionsmischung oder danach aus der Stoffmischung abgetrennt werden.

Die Desaktivierungsreaktion kann durch den Zusatz von Katalysatoren gesteuert werden. Als Desaktivierungskatalysatoren eignen sich die bekannten Polyurethankatalysatoren zur Katalyse der Polyisocyanat-Polyol-Polyaddition.

Zur Herstellung der im erfindungsgemäßen Verfahren verwendeten Stoffmischungen können die Mengerverhältnisse und Äquivalenzverhältnisse von Polyisocyanaten zu Polyolen in breiten Grenzen variiert werden. Die Stoffmischungen enthalten die Polyisocyanate und Polyole zweckmäßigerweise in solchen Mengen, daß das Verhältnis von freien Isocyanatgruppen zu Hydroxylgruppen 0,7 bis 2,5 : 1, vorzugsweise 0,9 bis 1,2 : 1 ist. Es ist jedoch auch möglich, Stoffmischungen herzustellen, die die desaktivierten Polyisocyanate in hoher Konzentration, beispielsweise in Verhältnissen von freien Isocyanatgruppen zu Hydroxylgruppen von 2,5 bis 100 : 1, vorzugsweise von 20 bis 40 : 1 enthalten. Derartige Stoffmischungen, die auch als Masterbatch bezeichnet werden, werden vor der Verarbeitung zu Formteilen mit den beschriebenen Polyolen auf die obengenannten Äquivalenzverhältnisse von freien Isocyanat- zu Hydroxylgruppen von 0,7 bis 2,5 : 1, vorzugsweise 0,9 bis 1,2 : 1 verdünnt.

Die Stoffmischungen sind bei 25°C mehr als einen Monat lagerstabil, d.h. innerhalb dieses Zeitraums tritt eine die bestimmungsgemäße Verwendung beeinträchtigende Produktveränderung nicht ein.

Zur Herstellung von verstärkten, zelligen Polyurethan-Formteilen werden der Stoffmischung Treibmittel einverleibt. Als Treibmittel geeignet ist beispielsweise Wasser, das bei erhöhter Temperatur mit den freien Isocyanatgruppen unter Bildung von Kohlendioxid reagiert. Die Wassermengen, die zweckmäßigerweise verwendet werden, betragen 0,1 bis 3 Gew.-%, vorzugsweise 0,5 bis 2 Gew.-% bezogen auf das Gewicht der Stoffmischung.

Andere verwendbare Treibmittel, die allein oder gegebenenfalls zusätzlich mitverwendet werden können, sind niedrigsiedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-2,3,3-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen Polyurethan-Formteilen hängt ab von der Dichte, die man erreichen will sowie gegebenenfalls von der Mitverwendung von Wasser. Im allgemeinen liefern Mengen von 1 bis 15 Gew.-Teilen, bezogen auf 100 Gew.-Teile der Stoffmischung, zufriedenstellende Ergebnisse.

Der Stoffmischung können gegebenenfalls auch noch Hilfs- und/oder Zusatzstoffe einverleibt werden. Genannt seien beispielsweise Katalysatoren, oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als Katalysatoren werden insbesondere Verbindungen verwendet, die die Reaktion der Polyole mit den Polyisocyanaten stark beschleunigen. In Betracht kommen organische Metallverbindungen, vorzugsweise organische Zinnverbindungen, wie Zinn-(II)-salze von organischen Carbonsäuren, z. B. Zinn-(II)-acetat, Zinn-(II)-octoat, Zinn-(II)-ethylhexoat und Zinn-(II)-laurat und die Dialkylzinn-(IV)-salze von organischen Carbonsäuren, z. B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, Pentamethyl-diethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-N,N-dimethylaminopropyl-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,005 bis 2 Gew.-% Katalysator bzw. Katalysatorkombination bezogen auf das Gewicht der Stoffmischung.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z. B. ölsaures Diethylamin oder stearinsaures Diethanolamin, Salze von Sulfonsäuren, z. B. Alkali- oder Ammoniumsalze von Dodecylbenzol- oder Dinaphthylmethandi-

6

EP 0 145 995 B1

sulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gew.-Teilen, bezogen auf 100 Gew.-Teile Stoffmischung, angewandt.

Als Füllstoffe sind die an sich bekannten üblichen anorganischen und organischen Füllstoffe, Beschwerungsmittel, Mittel zur Verbesserung des Abriebverhaltens in Anstrichfarben oder Beschichtungsmitteln zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche faserförmige Mineralien wie Asbest und Wollastonit. Als organische Füllstoffe kommen beispielsweise in Betracht: Kohle, Melamin, Kollophonium, Cyclopentadienylharze und vorzugsweise Pfropfpolymerisate auf Styrol-Acrylnitrilbasis, die durch in situ Polymerisation von Acrylnitril-Styrol-Mischungen in Polyetherolen analog den Angaben der deutschen Patentschriften 1 111 394, 1 222 669 (US-3 304 273, 3 383 351, 3 523 093), 1 152 536 (GB-1 040 452) und 1 152 537 (GB-987 618) hergestellt werden sowie Fillerpolyole, bei denen wäßrige Polymerdispersionen in Polyoldispersionen übergeführt werden.

Die anorganischen und/oder organischen Füllstoffe, die einzeln oder als Gemische verwendet werden können, werden in Mengen von 0,5 bis 50 Gew.-%, vorzugsweise 1 bis 40 Gew.-%, bezogen auf das Gewicht der Stoffmischung, eingesetzt.

Nähere Angaben über die obengenannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, zu entnehmen.

Als verstärkend wirkende Materialien kommen vorzugsweise in Betracht: Stein- oder Schlackenwolle, Asbest-, Bor-, Aluminiumoxid-, Kohlenstoff-, Stahl- und vorzugsweise Glasfasern; Wolle, Cellulose-, Polyester-, Polyamid-, Polyacryl-, Polyvinylalkohol-, Polycarbonat- und Polyurethanfasern und/oder faserhaltige Flächengebilde, die bestehen aus genadelten oder ungenadelten Matten, Vliesen, Filzen oder Geweben aus Textil-, Kunststoff-, Asbest-, Kohlenstoff-, Metall- oder vorzugsweise Glasfasern.

Die Einarbeitung der verstärkend wirkenden Materialien in die Stoffmischung kann beispielsweise auf folgende Weise durchgeführt werden:

Geschnittene Fasern unterschiedlicher Länge, beispielsweise von 0,05 bis 1 μm, vorzugsweise von 0,1 bis 0,4 μm, können ebenso wie die gegebenenfalls erforderlichen Hilfsmittel und/oder Zusatzstoffe mit Hilfe von üblichen Dosier- und Mischaggregaten, beispielsweise Rührwerken, durch Injektionsvermischung u.a. in die Stoffmischung eingebracht und dann homogen verteilt werden.

Bei Verwendung von faserhaltigen Flächengebilden, vorzugsweise Glasfasermatten mit Flächengewichten von 100 bis 1200 g/m², insbesondere von 400 bis 600 g/m², kann die gegebenenfalls Hilfsmittel und/oder Zusatzstoffe enthaltende Stoffmischung auf das Flächengebilde aufgesprüht oder gegossen werden oder die Flächengebilde werden einzeln oder in mehreren Schichten mit der Stoffmischung getränkt. Da die Stoffmischung erst bei höheren Temperaturen reagiert, können die verstärkend wirkenden Materialien unterhalb der Reaktionstemperatur intensiv mit der Stoffmischung durchtränkt werden.

Das Verhältnis von gegebenenfalls Treibmittel enthaltender Stoffmischung zu verstärkend wirkenden Materialien wird hierbei so gewählt, daß die ausgehärteten Polyurethan-Formteile, bezogen auf das Gesamtgewicht, 10 bis 90 Gew.-%, vorzugsweise 20 bis 70 Gew.-%, mindestens eines verstärkend wirkenden Materials, vorzugsweise Glasfasern, enthalten.

Die Herstellung der erfindungsgemäßen verstärkten, kompakten oder zelligen Polyurethan-Formteile wird in offenen oder geschlossenen, vorzugsweise temperierbaren metallischen Formwerkzeugen, beispielsweise in Stahl-, Guß- oder Aluminiumformen, bei Temperaturen von 70 bis 200°C, vorzugsweise 100 bis 180°C, durchgeführt, wobei zur Herstellung der zelligen Polyurethan-Formteile Verdichtungsgrade von 1 bis 10, vorzugsweise von 1,5 bis 5 Anwendung finden. Die Verweilzeit im Formwerkzeug ist abhängig u.a. von der Reaktionstemperatur sowie von der Größe und Raumform des Formteils und beträgt durchschnittlich 0,25 bis 12 Minuten, vorzugsweise 0,5 bis 5 Minuten.

Zur Herstellung der Polyurethan-Formteile werden die Stoffmischung und die verstärkend wirkenden Materialien sowie gegebenenfalls Treibmittel, Hilfsmittel und/oder Zusatzstoffe üblicherweise bei Temperaturen von 0 bis 40°C, vorzugsweise 10 bis 30°C, homogen gemischt, die Reaktionsmischung in das offene, gegebenenfalls erwärmte Formwerkzeug eingefüllt und in dem offenen oder geschlossenen Formwerkzeug bei den genannten Reaktionstemperaturen gegebenenfalls verschäumt und aushärten gelassen.

Nach einer anderen Verfahrensweise werden die verstärkend wirkenden Materialien, vorzugsweise die faserhaltigen Flächengebilde, in das offene Formwerkzeug eingelegt, dort mit der gegebenenfalls Treibmittel enthaltenden Stoffmischung und gegebenenfalls Hilfsmittel und/oder Zusatzstoffen besprüht, übergossen, getränkt oder nach anderen Methoden behandelt. Danach wird das Formwerkzeug verschlossen und die Reaktionsmischung aus mit Stoffmischung behandelten, verstärkend wirkenden Materialien in dem genannten Temperaturbereich von 70 bis 200°C, gegebenenfalls unter Verdichtung verschäumt und aushärten gelassen.

Sofern es gewünscht wird, können die Polyurethan-Formteile in den Formwerkzeugen bei der Verformung und Aushärtung gleichzeitig - bei der Plattenherstellung ein-, beid- oder allseitig - mit einer Trennfolie oder

7

einem Dekormaterial, beschichtet werden. Die Innenwände des offenen Formwerkzeugs werden hierzu mit den genannten Materialien teilweise oder vollständig belegt und danach die verstärkend wirkenden Materialien und die Stoffmischung in die Form eingebracht. Die Verschäumung und/oder Aushärtung erfolgt in der oben beschriebenen Weise.

Als Trennfolie oder nicht- oder direkt eingefärbte oder bedruckte Dekormaterialien seien beispielhaft genannt: Gewebe oder Vliese aus Kunst- oder Naturfasern, Folien aus Metall, wie z. B. Aluminium, Kupfer, Messing, Gold oder Stahlblech, Polyvinylchlorid, Acrylnitril-Butadien-Styrol-Polymerisaten, Polyamid, Polyester, Polyethylen, Polypropylen, Celluloseestern oder -mischestern, Karton oder Papierbahnen sowie eingedickten Prepregs aus ungesättigten Polyesterharzen.

Die erfindungsgemäßen Polyurethan-Formteile finden Verwendung als selbsttragende Verkleidungsteile, Versteifungsteile oder Formkörper in der Schienenfahrzeug-, Kraftfahrzeug- und Flugzeugindustrie, z. B. als Dachhimmel, Türen- und Wandverkleidungen, Armaturentafeln, -bretter und Motorraumabdeckungen. Die Produkte werden jedoch auch in der Möbelindustrie, der Phono- und Fernsehtechnik und der Bauindustrie als Verkleidungen eingesetzt.

Bedingt durch die gegebenenfalls hohen Konzentrationen an verstärkend wirkenden Materialien besitzen die erfindungsgemäßen Polyurethan-Formteile einen hohen Elastizitätsmodul, beispielsweise von 3000 bis 10000 $N/mm^2$, bei gleichzeitig guter Schlagzähigkeit z. B. mit Werten von 30 bis 120 $kJ/m^2$.

**Beispiel 1**

Herstellung einer lagerstabilen, hitzehärtbaren Stoffmischung

In 500 Gew.-Teilen eines Polyoxypropylen-glykols mit einer Hydroxylzahl von 56 wurden bei ca. 20 bis 25° C mit einem Dissolver 550 Gew.-Teile über Uretdionbindungen dimerisiertes 2,4-Toluylen-diisocyanat dispergiert. In die erhaltene Dispersion wurden über einen Zeitraum von 5 Minuten 5,5 Gew.-Teile eines Polyamidamins (®Euretek 505 der Firma Schering, Berlin) eindispergiert. Man erhielt eine fließfähige, pastenartige Dispersion, die bei Raumtemperatur mehr als 6 Monate lagerstabil war.

**Beispiel 2**

148,5 Gew.-Teile der hitzehärtbaren Stoffmischung, hergestellt nach Beispiel 1,
100 Gew.-Teile eines mit Glycerin gestarteten Polyoxypropylen-triols mit einer Hydroxylzahl von 400 und
0,35 Gew.-Teile eines metallorganischen Polyurethankatalysators (®Mergal 030 der Firma Riedel de Haen) wurden bei 20 bis 23° C intensiv vermischt.

In eine auf 160°C erhitzte, mit üblichen Trennmitteln behandelte Metallform mit den Innenabmessungen 150x200x3 mm wurden 5 Lagen eines Glasfaservlies (OCF 8681-600 CX1 der Owens Corning Fiberglas) eingebracht und diese mit 65,2 g der Reaktionsmischung übergossen. Die Metallform wurde mit einer Presse geschlossen und die Reaktionsmischung 3 Minuten lang gehärtet. Danach wurde entformt.
An dem erhaltenen Formteil wurden folgende mechanische Eigenschaften gemessen:

| | | |
|---|---|---|
| Glasgehalt | [Gew.-%] | 58 |
| Zugfestigkeit | [$N/mm^2$] | 42,6 |
| Bruchdehnung | [%] | < 10 |
| Härte Shore D | | 75 |
| Wärmeformbeständigkeit nach ISO-75 B | [°C] | 247 |
| Biege-E-Modul | [$N/mm^2$] | 7910 |
| Schlagzähigkeit | | |
| -20° C | [$kJ/m^2$] | 61,3 |
| +23° C | [$kJ/m^2$] | 97,5 |

**Beispiel 3**

Man verfuhr analog den Angaben von Beispiel 2, verwandte jedoch 7 Lagen Glasfaservlies (OCF 8681-600 CX1) und 48,0 g der hitzehärtbaren Stoffmischung nach Beispiel 1.
An dem erhaltenen Formteil wurden folgende mechanische Eigenschaften gemessen:

| | | |
|---|---|---|
| Glasgehalt | [Gew.-%] | 72 |
| Zugfestigkeit | [$N/mm^2$] | 61,5 |

| Bruchdehnung | [%] | <10 |
|---|---|---|
| Härte Shore D | | 75 |
| Wärmeformbeständigkeit nach ISO-75 B | [°C] | 250 |
| Biege-E-Modul | [N/mm$^2$] | 10410 |
| Schlagzähigkeit | | |
| -20°C | [kJ/m$^2$] | 107 |
| +23°C | [kJ/m$^2$] | 116 |

**Beispiel 4**

210,8 Gew.-Teile der hitzehärtbaren Stoffmischung nach Beispiel 1,

100 Gew.-Teile eines mit Glycerin gestarteten Polyoxypropylen-triols mit einer Hydroxylzahl von 400,

6 Gew.-Teile Emulgator Zusatzmittel SM der Bayer AG (50 gew.-%-ige wäßrige Lösung),

0,4 Gew.-Teile metallorganischer Polyurethankatalysator (Mergal 030),

0,05 Gew.-Teile Dibutylzinndilaurat,

0,05 Gew.-Teile einer 70 gew.-%-igen Lösung von Bis-(N,N-dimethylaminoethyl)ether in Dipropylenglykol und

0,1 Gew.-Teile Schaumstabilisator auf Silikonbasis (DC 190 der Firma Dow Corning, Midland) wurden bei 20 bis 23°C intensiv gemischt.

45 g der Reaktionsmischung wurden analog den Angaben von Beispiel 2 in einer Metallform, die 2 Lagen Glasfaservlies (OCF 8681-600 CX1) enthielt, zu einem zelligen Formteil ausgehärtet.

An dem Formteil, das nach einer Minute entformt wurde, wurden folgende mechanische Eigenschaften gemessen:

| Glasgehalt | [Gew.-%] | 44 |
|---|---|---|
| Dichte | [g/cm$^3$] | 0,9 |
| Zugfestigkeit | [N/mm$^2$] | 9,7 |
| Bruchdehnung | [%] | <10 |
| Biege-E-Modul | [N/mm$^2$] | 2800 |
| Wärmeformbeständigkeit nach ISO-75 B | [°C] | 187 |
| Schlagzähigkeit | | |
| -20°C | [kJ/m$^2$] | 44 |
| +23°C | [kJ/m$^2$] | 30 |

**Beispiel 5**

199 Gew.-Teile der hitzehärtbaren Stoffmischung hergestellt nach Beispiel 1,

40 Gew.-Teile eines Glycerin gestarteten Polyoxypropylen-oxyethylen-triols mit einer Hydroxylzahl von 35,

60 Gew.-Teile eines Glycerin gestarteten Polyoxypropylen-triols mit einer Hydroxylzahl von 560,

6 Gew.-Teile Emulgator Zusatzmittel SM,

0,4 Gew.-Teile metallorganischer Polyurethankatalysator (Mergal 030),

0,05 Gew.-Teile Dibutylzinndilaurat,

0,05 Gew.-Teile einer 70 gew.-%-igen Lösung von Bis-(N,N-dimethylaminoethyl)ether in Dipropylenglykol und

0,1 Gew.-Teile Schaumstabilisator auf Silikonbasis (DC 190 der Firma Dow Corning) wurden bei 20 bis 23°C intensiv gemischt.

40 g der Reaktionsmischung wurden analog den Angaben von Beispiel 2 in einer Metallform, die 2 Lagen Glasfaservlies (OCF 8681-600 CX1) enthielt, zu einem zelligen Formteil ausgehärtet. Nach einer Minute wurde entformt.

An dem Formteil wurden folgende mechanische Eigenschaften gemessen:

| Glasgehalt | [Gew.-%] | 47 |
|---|---|---|
| Dichte | [g/cm$^3$] | 0,84 |
| Zugfestigkeit | [N/mm$^2$] | 12,1 |
| Bruchdehnung | [%] | <10 |
| Biege-E-Modul | [N/mm$^2$] | 2950 |
| Wärmeformbeständigkeit nach ISO-75 B | [°C] | 187 |
| Schlagzähigkeit | | |
| -20°C | [kJ/m$^2$] | 35 |
| +23°C | [kJ/m$^2$] | 28 |

**Patentansprüche**

1. Verfahren zur Herstellung von verstärkten, kompakten oder zelligen Polyurethan-Formteilen, dadurch gekennzeichnet, daß man ein bei Raumtemperatur festes organisches Polyisocyanat in Form von diskreten Teilchen mit Teilchendurchmessern von 0,1 bis 150 μm an der Teilchenoberfläche durch chemische Reaktion mit einem Desaktivierungsmittel, ausgewählt aus der Gruppe der primären und sekundären aliphatischen Amine, Wasser oder Verbindungen, die Carboxyl-, phenolische Hydroxyl-, Hydrazid-, Amid- oder alkoholische Hydroxylgruppen enthalten. wobei die Verbindungen mit alkoholischen Hydroxylgruppen eine Löslichkeit in Wasser von kleiner als 1 Gew.-% besitzen, desaktiviert, indem man 0,1 bis 20 Äquivalentprozent der insgesamt vorhandenen Isocyanatgruppen des festen organischen Polyisocyanats in Gegenwart eines Verdünnungsmittels mit dem Desaktivierungsmittel umsetzt und das erhaltene oberflächenmodifizierte Polyisocyanat (a) in einem Polyol (b) dispergiert mit der Maßgabe, daß die Stoffmischung aus (a) und (b) eine Viskosität bei 25°C von 100 bis 10 000 m.Pa.s besitzt und

diese Stoffmischung mit verstärkend wirkenden Materialien (c) aus der Gruppe der anorganischen Fasern, organischen Fasern und/oder faserhaltigen Flächengebilde und gegebenenfalls (d) Hilfsmitteln und/oder Zusatzstoffen in Kontakt bringt und unter Erwärmung in offenen oder geschlossenen Formwerkzeugen umsetzt.

2. Verfahren zur Herstellung von verstärkten, kompakten oder zelligen Polyurethan-Formteilen, dadurch gekennzeichnet, daß man ein bei Raumtemperatur festes organisches Polyisocyanat, in Form von diskreten Teilchen mit Teilchendurchmessern von 0,1 bis 150 μm in einem Polyol (b) dispergiert und in situ an der Teilchenoberfläche durch chemische Reaktion mit einem Desaktivierungsmittel, ausgewählt aus der Gruppe der primären und sekundären aliphatischen Amine, Wasser oder Verbindungen, die Carboxyl-, phenolische Hydroxyl-, Hydrazid-, Amid- oder alkoholische Hydroxylgruppen enthalten, wobei die Verbindungen mit alkoholischen Hydroxylgruppen eine Löslichkeit in Wasser von kleiner als 1 Gew.-% besitzen, desaktiviert, indem man 0,1 bis 20 Äquivalentprozent der insgesamt vorhandenen Isocyanatgruppen des festen organischen Polyisocyanats mit dem Desaktivierungsmittel umsetzt, welches gegenüber Isocyanatgruppen reaktiver ist als die funktionellen Gruppen von (b) mit der Maßgabe, daß die Stoffmischung aus (a) und (b) eine Viskosität bei 25°C von 100 bis 10 000 m.Pa.s besitzt und

diese Stoffmischung mit verstärkend wirkenden Materialien (c) aus der Gruppe der anorganischen Fasern, organischen Fasern und/oder faserhaltigen Flächengebilde und gegebenenfalls (d) Hilfsmitteln und/oder Zusatzstoffen in Kontakt bringt und unter Erwärmung in offenen oder geschlossenen Formwerkzeugen umsetzt.

3. Verfahren nach Anspruch 1 oder 2, dadurch gekennzeichnet, daß man die Stoffmischung aus (a) und (b) und die verstärkend wirkenden Materialien (c) in ein heizbares Formwerkzeug einbringt und in dem offenen oder geschlossenen Formwerkzeug, gegebenenfalls unter Verdichtung, bei Temperaturen von 70 bis 200°C aushärten läßt.

4. Verstärkte, kompakte oder zellige Polyurethan-Formteile, erhältlich nach dem Verfahren von Anspruch 1 oder den Ansprüchen 1 und 3.

5. Verstärkte, kompakte oder zellige Polyurethan-Formteile, erhältlich nach dem Verfahren von Anspruch 2 oder den Ansprüchen 2 und 3.

6. Verstärkte, kompakte oder zellige Polyurethan-Formteile, hergestellt nach einem der Ansprüche 1 bis 3, dadurch gekennzeichnet, daß diese 10 bis 90 Gew.-% verstärkend wirkende Materialien, bezogen auf das Gesamtgewicht, enthalten.

7. Verwendung der verstärkten, kompakten oder zelligen Polyurethan-Formteile, hergestellt nach einem der Ansprüche 1 bis 3 als selbsttragende Verkleidungsteile, Versteifungsteile oder Formkörper im Kraftfahrzeug-, Schienenfahrzeug- oder Flugzeugbau, in der Möbel- oder Bauindustrie.

**Claims**

1. A process for producing a reinforced, compact or cellular polyurethane molding, wherein an organic polyisocyanate which is solid at room temperature and is present in the form of discrete particles from 0.1 to 150 μm in diameter is deactivated at the particle surface by chemical reaction with a deactivating agent selected from the group consisting of the primary and secondary aliphatic amines, water, and compounds which contain carboxyl, phenolic hydroxyl, hydrazide, amide or alcoholic hydroxyl groups, the compounds with alcoholic hydroxyl groups having a solubility in water of less than 1 % by weight, by reacting from 0.1 to 20 equivalent percent of the total number of isocyanate groups present in the solid organic polyisocyanate with the deactivating agent in the presence of a diluent, and the resulting surface-modified polyisocyanate (a) is dispersed in a polyol (b), with the proviso that the mixture of (a) and (b), has a viscosity at 25°C of from 100 to 10,000 mPa.s, and this mixture is brought into contact with a reinforcing material (c) from the group of the inorganic fibers, organic fibers and fiber-containing sheetlike structures in the presence or absence of (d) assistants and/or additives and reacted by heating in an open or closed mold.

2. A process for producing a reinforced, compact or cellular polyurethane molding, wherein an organic polyisocyanate which is solid at room temperature is dispersed in the form of discrete particles from 0.1 to 150 μm in diameter in a polyol (b) and deactivated in situ at the particle surface by chemical reaction with a deactivating agent selected from the group consisting of the primary and secondary aliphatic amines, water, and compounds which contain carboxyl, phenolic hydroxyl, hydrazide, amide or alcoholic hydroxyl groups, the compounds with alcoholic hydroxyl groups having a solubility in water of less than 1 % by weight, by reacting from 0.1 to 20 equivalent percent of the total number of isocyanate groups present in the solid organic polyisocyanate with the deactivating agent which is more reactive toward isocyanate groups than the functional groups of (b), with the proviso that the mixture of (a) and (b) has a viscosity at 25°C of from 100 to 10,000 mPa.s, and this mixture is brought into contact with a reinforcing material (c) from the group of the inorganic fibers, organic fibers and fiber-containing sheetlike structures in the presence or absence of (d) assistants and/or additives and reacted by heating in an open or closed mold.

3. A process as claimed in claim 1 or 2, wherein the mixture of (a) and (b) and the reinforcing material (c) are introduced into a heatable mold and cured in the open or closed mold at from 70 to 200°C with or without compaction.

4. A reinforced, compact or cellular polyurethane molding obtainable by the process of claim 1 or claims 1 and 3.

5. A reinforced, compact or cellular polyurethane molding obtainable by the process of claim 2 or claims 2 and 3.

6. A reinforced, compact or cellular polyurethane molding produced by any of claims 1 to 3, which contains from 10 to 90 % by weight of reinforcing material, based on the total weight.

7. The use of a reinforced, compact or cellular polyurethane molding produced by any of claims 1 to 3 as a self-supporting lining component, stiffening component or shaped article in automotive, track vehicle or aircraft construction or in the furniture or building industry.

**Revendications**

1. Procédé de fabrication d'articles moulés en polyuréthanes, compacts ou alvéolaires, renforcés, caractérisé en ce que l'on désactive un polyisocyanate organique, solide à la température ambiante, sous la forme de particules distinctes qui possèdent des diamètres de 0,1 à 150 µm, à la surface des particules, par une réaction chimique avec un agent de désactivation choisi dans le groupe formé par les amines aliphatiques primaires et secondaires, l'eau ou des composés qui contiennent des radicaux carboxyle, hydroxyle phénolique, hydrazide, amide ou hydroxyle alcoolique, où les composés avec des radicaux hydroxyle alcoolique possèdent une solubilité dans l'eau inférieure à 1 % en poids, en faisant réagir de 0,1 à 20 équivalent-% des radicaux isocyanate du polyisocyanate organique solide, présents au total, en présence d'un diluant, sur l'agent de désactivation et on disperse le polyisocyanate (a) modifié en surface, ainsi obtenu, dans un polyol (b), avec la condition que le mélange de (a) et de (b) possède une viscosité à 25°C de 100 à 10000 m.Pa.s et on met en contact ce mélange avec des matières (c) à activité de renforcement appartenant à la classe des fibres inorganiques, des fibres organiques et/ou d'articles plats contenant des fibres et éventuellement des adjuvants et/ou des additifs et on les fait réagir, sous chauffage, dans des moules ouverts ou fermés.

2. Procédé de fabrication d'articles moulés en polyuréthanes compacts ou alvéolaires renforcés, caractérisé en ce que l'on disperse un polyisocyanate organique, solide à la température ambiante, sous la forme de particules distinctes d'un diamètre de 0,1 à 150 µm, dans un polyol (b) et on les désactive en surface par une réaction chimique sur un agent de désactivation, choisi dans le groupe formé par les amines aliphatiques primaires et secondaires, l'eau ou des composés qui contiennent des radicaux carboxyle, hydroxyle phénolique, hydrazide, amide ou hydroxyle alcoolique, où les composés à radicaux hydroxyle alcoolique possèdent une solubilité dans l'eau inférieure à 1 % en poids, pour autant que l'on fasse réagir de 0,1 à 20 équivalent-% des radicaux isocyanate du polyisocyanate organique solide, présents au total, sur l'agent de désactivation, qui est plus réactif vis-à-vis des radicaux isocyanate que les radicaux fonctionnels de (b), avec la condition que le mélange de (a) et de (b) possède une viscosité à 25°C de 100 à 10000 m.Pa.s et on met ce mélange en contact avec des matières (c) à activité de renforcement, appartenant à la classe des fibres inorganiques, des fibres organiques et/ou des articles plats contenant des fibres et éventuellement des adjuvants et/ou des additifs et on les fait reagir, sous chauffage, dans des moules ouverts ou fermés.

3. Procédé suivant la revendication 1 ou 2, caractérisé en ce que l'on introduit le mélange de (a) et de (b) et des matières (c) à activité de renforcement dans un moule chauffable et on le laisse durcir dans le moule ouvert ou fermé, éventuellement sous compression, à des températures de 70 à 200°C.

4. Articles moulés en polyurethanes, compacts ou cellulaires, renforcés, obtenus par mise en oeuvre du procédé suivant la revendication 1 ou des revendications 1 et 3.

5. Articles moulés en polyutéthanes, compacts ou cellulaires, renforcés, obtenus par mis en oeuvre du procédé suivant la revendication 2 ou des revendications 2 et 3.

6. Articles moulés en polyuréthanes, compacts ou cellulaires, renforcés, obtenus par mise en oeuvre des revendications 1 à 3, caractérisés en ce que, par rapport au poids total, ils contiennent de 10 à 90 % en poids de matières à activité de renforcement.

7. Utilisation des articles moulés en polyuréthanes, compacts ou cellulaires, renforcés, obtenus par mise en oeuvre de l'une des revendications 1 à 3, à titre d'articles d'habillage, de revêtement ou de garniture, autonomes, d'articles de renforcement ou de corps moulés dans l'industrie des véhicules automobiles, des véhicules ferroviaires ou des aéronefs, ainsi que dans l'industrice de la construction et des meubles.